# DEMANDE DE BREVET EUROPEEN

(11) **EP 1 152 309 A1**
(43) Date de publication de la demande: **07.11.2001**
(21) Numéro de dépôt: 01401122.5
(22) Date de dépôt: 30.04.2001
(51) Int. Cl.: G05B 19/042, G05B 19/05

(54) **Procédé de commande d'un organe de véhicule automobile**

(30) Priorité: 04.05.2000 FR 0005690
(71) Demandeur: SAGEM SA, 75116 Paris (FR)
(72) Inventeur: Querry, Gérard, 93380 Pierrefitte (FR)
(74) Mandataire: Bloch, Gérard

(57) **Abrégé**

Le procédé de commande, sous une pluralité de conditions (C1, C2, C3 ; 32, 34, 36) et par un calculateur de bord, d'un organe d'un véhicule automobile, consiste à ranger les conditions (C1, C2, C3 ; 32, 34, 36) dans une suite et à contrôler toutes les conditions de la suite en gardant la trace (33, 35, 37) du contrôle positif de condition de rang inférieur pour commander l'organe.

## Description

La présente invention concerne la sécurité de fonctionnement d'un équipement de commande d'organes de véhicule automobile, tel qu'un calculateur de bord.

Les véhicules automobiles modernes sont gérés par un calculateur de bord qui commande, entre autres, la mise sous tension du démarreur, l'alimentation des phares, gère le fonctionnement des feux clignotants, des circuits d'allumage et contrôle aussi le déverrouillage de la colonne de direction.

Le conducteur du véhicule ne commande donc qu'indirectement les divers organes évoqués ci-dessus, à travers le calculateur de bord. Il faut donc exclure tout risque d'un fonctionnement du calculateur qui ne serait pas conforme aux commandes du conducteur et pourrait affecter sa sécurité, comme par exemple l'extinction intempestive des phares ou encore le blocage de la colonne de direction.

La présente invention vise à proposer une solution à ce problème de sécurité.

A cet effet, l'invention concerne un procédé de commande, sous une pluralité de conditions et par un calculateur de bord, d'un organe d'un véhicule automobile, procédé dans lequel on range les conditions dans une suite et on contrôle toutes les conditions de la suite en contrôlant chaque condition et en gardant la trace du contrôle positif de condition de rang inférieur pour commander l'organe.

Ainsi, l'ordre d'exécution de l'étape de commande ne peut être effectivement exécuté que s'il est associé aux traces de contrôles positifs de toutes les conditions à satisfaire.

L'invention présente au moins deux avantages :
- il n'est pas nécessaire, au moment de l'exécution de l'ordre de commande, de s'assurer que toutes les conditions ont bien été préalablement satisfaites,
- on garde la trace de toute condition ne pouvant être satisfaite que de façon fugitive.

Avantageusement, les conditions à contrôler sont rangées dans une suite déterminée et on interrompt la suite des contrôles après un contrôle négatif.

On déroule ainsi très simplement les étapes de contrôle dans l'ordre déterminé puisque les mots de code constituent les extrémités de maillons ordonnés de la chaîne des contrôles.

Avantageusement encore, on balaie ligne par ligne un organigramme d'un algorithme d'exécution d'étapes de contrôle, en exécutant, l'une après l'autre, des transitions algorithmiques de branches parallèles de l'organigramme.

L'invention sera mieux comprise à l'aide de la description suivante d'un mode préféré de mise en oeuvre du procédé de l'invention, en référence au dessin annexé, sur lequel :
- la figure 1 représente schématiquement un calculateur de bord de véhicule automobile relié à divers capteurs et actionneurs et mettant en oeuvre le procédé de l'invention, et
- la figure 2 est un organigramme illustrant le procédé.

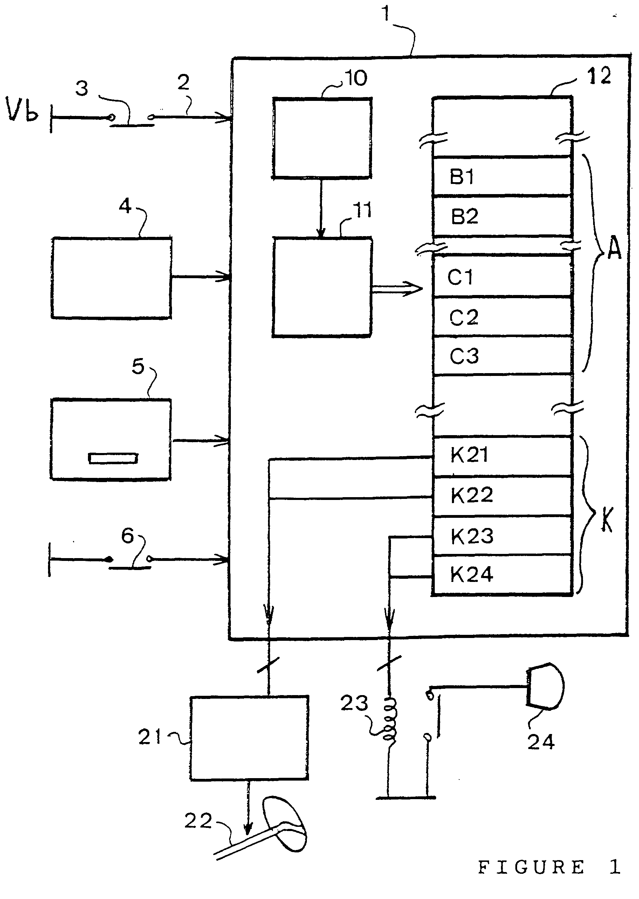

Le calculateur de bord représenté sur la figure 1 et portant la référence 1 gère divers organes d'un véhicule automobile. Il est relié en entrée à divers capteurs et dispositifs de commande manuelle du véhicule, ici i) un fil d'alimentation 2 relié à la tension batterie Vb à travers un interrupteur 3 de mise sous tension de réseau de bord, ii) un odomètre 4 indiquant la vitesse du véhicule, iii) un lecteur 5 de carte à puce de contrôle du calculateur 1, iv) un interrupteur de commande des phares 24 actionné par le conducteur, et d'autres capteurs et dispositifs de commande, non représentés. En sortie, le calculateur 1 commande un mécanisme 21 de verrouillage de la colonne de direction 22, commande un relais 23 d'alimentation des phares 24 et commande des circuits d'allumage, d'essuie-glaces et autres circuits ou organes non représentés.

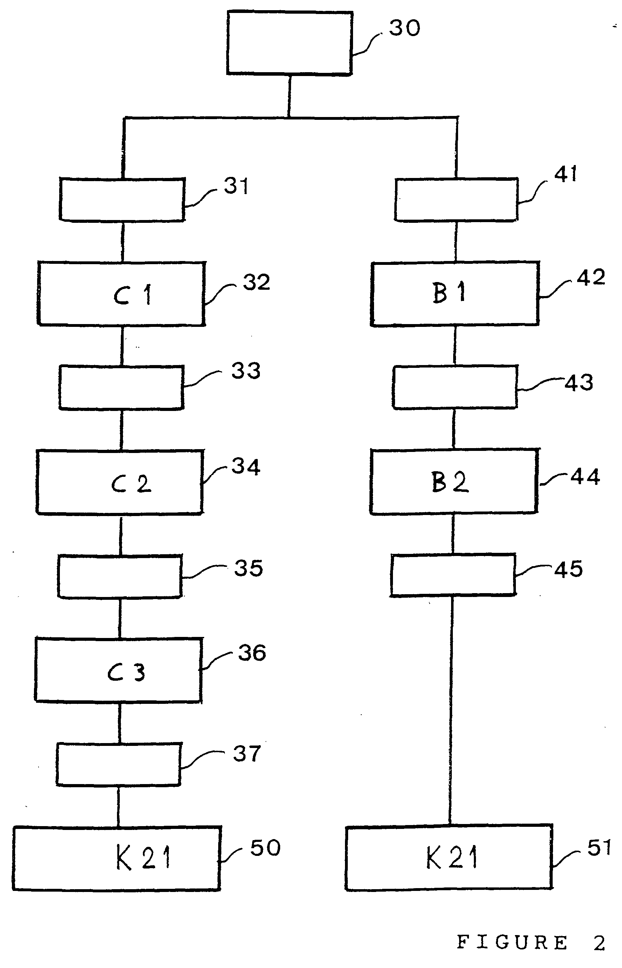

Le calculateur de bord 1 comporte une base de temps 10 qui rythme le fonctionnement d'un compteur ordinal 11 adressant une mémoire sauvegardée 12, ici de technologie FLASH, contenant un logiciel comportant un ensemble K de commandes d'organes du véhicule. Ainsi, les références K21 et K22 désignent des instructions de commande respectives de verrouillage et de déverrouillage du mécanisme 21 et les instructions de commande référencées K23 et K24 sont respectivement relatives à l'allumage et l'extinction des phares 24 par le relais 23, ici de type bistable et à deux entrées de commande séparées non représentées en détail. La mémoire 12 contient en outre un ensemble A d'instructions, comme celles référencées B1, B2 et C1, C2, C3, d'exécution de contrôles préalables à l'exécution de commandes de l'ensemble K. Comme expliqué plus loin en référence à l'organigramme de la figure 2, les instructions de contrôle B1, B2 et C1, C2, C3 représentent deux suites, en parallèle, d'instructions de contrôle de conditions, suites qui autorisent chacune l'exécution des instructions de commande K21 et K22. Les conditions préalables à l'exécution des instructions de commande K23 et K24 n'ont pas ici été représentées, dans un but de clarté.

Le fonctionnement du calculateur 1 va maintenant être expliqué plus en détails.

Le logiciel de la mémoire 12 a pour fonction de gérer les divers organes du véhicule, c'est-à-dire en particulier de scruter les diverses entrées ci-dessus reliées aux capteurs et dispositifs de commande à la disposition du conducteur et d'émettre en réponse une commande de l'ensemble K le cas échéant, pour modifier l'état de l'un des organes commandés comme 21 à 24.

Il est toutefois primordial d'éviter l'envoi intempestif de toute commande de l'ensemble K qui serait susceptible ici de mettre en jeu la sécurité du conducteur. Or, l'architecture matérielle classique du calculateur de bord 1 ne permet pas de fournir toute garantie à ce sujet c'est son architecture logicielle selon l'invention qui fournit cette garantie, comme expliqué ci-après.

A la mise sous tension, le compteur ordinal 11 est chargé à une valeur initiale, par exemple à zéro, et adresse une première instruction de la mémoire 12 pour ensuite scruter cycliquement les divers capteurs et dispositifs de commande 2 à 6.

Par exemple, le conducteur peut, par un bouton non représenté, ordonner au calculateur 1, à travers son logiciel, d'exécuter l'instruction K21 de commande de verrouillage de la colonne de direction 22.

Le logiciel de la mémoire 12 comporte une procédure de contrôle de la validité de l'exécution de l'ordre provenant de l'entrée considérée. Cette procédure vérifie, d'une part, que le conducteur n'a pas fourni un ordre mettant sa sécurité en danger et vérifie, d'autre part, que le calculateur 1 fonctionne correctement.

Tout d'abord, dans l'exemple de l'ordre de verrouillage visant à exécuter l'instruction de commande K21, celle-ci n'est pas exécutée si, en particulier, l'odomètre 4 indique une vitesse non nulle (condition C3). En outre ici, la condition C1 correspond à une vérification de la présence et du contenu de la carte à puce du lecteur 5 et la condition C2 concerne la vérification du niveau électrique du fil 2 "tension batterie après contact". Dans la présente description, une référence de condition, comme C3, désigne aussi l'instruction de vérification de cette condition.

En ce qui concerne le bon fonctionnement du calculateur 1, toutes les diverses instructions seraient exécutées, dans un processus classique, par le seul fait que le compteur ordinal 11 les pointe, par fourniture de leur adresse. Lorsque le calculateur 11 reçoit en entrée l'ordre de commander le verrouillage, le compteur ordinal 11 pointe successivement une série d'instructions de contrôle comme C1, C2, C3, pour vérifier entre autres que la vitesse est nulle et l'instruction de contrôle finale C3 commande un passage, avec saut d'adresse éventuel commandé par l'instruction de contrôle C3, du compteur ordinal 11 de l'adresse, par exemple 36, de l'instruction de contrôle C3 à l'adresse, par exemple 50, de l'instruction de commande K21.

Cependant, une panne de composant ou une perturbation électrique peut être la cause d'une erreur car il n'est pas alors exclu que le compteur ordinal 11 passe par erreur à l'adresse 50 de l'instruction de commande K21 depuis une adresse quelconque d'un autre logiciel sans rapport avec les contrôles, donc alors qu'il n'était pas préalablement à l'adresse 36 de l'instruction de contrôle C3, seule habilitée (avec éventuellement des instructions homologues (B2) d'autres séries de contrôles comme B1, B2) à commander l'exécution de l'instruction de commande K21. Le compteur ordinal 11 pourrait aussi passer par erreur à l'une des instructions de contrôle aval C2, C3, donc sans exécuter l'instruction amont C1.

Pour éviter les effets d'une telle erreur d'adressage, qui provoquerait l'émission incontrôlée d'une commande K, la suite de conditions comme C1, C2, C3, qui permet de détecter une commande inopportune du conducteur, comporte aussi un processus de certification du fait que toutes les instructions de cette suite C1, C2, C3 ont bien été exécutées et cette certification, mémorisée, est vérifiée avant d'émettre la commande de l'étape de commande associée, ici K21. Le seul fait d'adresser une instruction de commande comme K21 est alors insuffisant pour en obtenir l'exécution.

Ainsi, on range les conditions C1, C2, C3 dans une suite et on contrôle toutes les conditions de la suite en contrôlant chaque condition et en gardant la trace du contrôle positif de condition de rang inférieur pour commander l'organe.

En cas de contrôle négatif d'une instruction C1 à C3, on peut prévoir d'interrompre le parcours de la suite des instructions de contrôle C1, C2, C3 et de l'instruction de commande associée K21, donc de ne pas adresser cette dernière. On peut toutefois aussi poursuivre le déroulement des instructions jusqu'à l'instruction de commande, ici K21, qui va alors détecter le contrôle négatif et bloquer toute émission de la commande de verrouillage K21.

Dans cet exemple, les conditions comme C1, C2, C3 sont rangées dans cet ordre dans une suite déterminée. L'ordre de cette suite n'est pas dans cet exemple lié à une quelconque contrainte technique mais a été choisi arbitrairement. On vérifie ensuite que les conditions C1, C2, C3 sont vérifiées dans l'ordre prévu, ce qui permet de détecter par exemple l'effet de parasites ou pannes modifiant l'état du compteur ordinal 11. Si par exemple les instructions C1, C2, C3 ont pour adresses respectives les valeurs 32, 34 et 36, une séquence d'adresses 34, 32, 36 révèle l'existence d'un défaut de fonctionnement, même si l'instruction finale C3 a conservé son rang. De même, on vérifie que chaque condition n'est contrôlée qu'une seule fois et une séquence anormale d'adresses comme 32, 32, 34, 36, qui comporte un redoublement d'exécution de l'instruction C1, est détectée pour bloquer toute commande K.

Pour garder la trace de chaque contrôle positif, il est ici prévu une suite de mots de code, respectivement V1, V2, V3, spécifiques à chaque contrôle C1, C2, C3 et indiquant chacun que l'étape qu'il représente s'est terminée positivement. L'étape finale d'émission de commande K21 n'est effectuée qu'après fourniture de tous les mots de code V1, V2, V3. En variante, chaque étape C2, C3, en aval d'une autre, transcode le mot de code (V1, V2) qu'elle reçoit de l'étape amont, de rang inférieur, en son propre mot de code V2, V3. On constitue ainsi une chaîne de mots de code V1, V2, V3 associés aux instructions ou conditions respectives de la suite C1, C2, C3 et le mot de code final V3 ne peut être fourni que si tous les mots de code V1, V2 des contrôles de rang inférieur C1, C2 ont eux-mêmes été fournis.

La trace du parcours de la suite des étapes de contrôle comme C1, C2, C3, disponible dans un registre à contenu évolutif écrit en dernier par l'instruction de contrôle final C3, est vérifiée par l'instruction de commande K21. L'instruction de commande K21 est à cette fin associée à une instruction de lecture préalable du registre considéré et de vérification de son contenu par rapport à la valeur prévue, mémorisée par ailleurs dans un registre statique, de valeur fixe de référence. L'instruction de lecture et de vérification ci-dessus constitue ainsi une étape frontale d'accès à la partie effective de l'étape d'exécution de commande K21.

Cette dernière forme ainsi une macro-instruction auto-protégée qui vérifie que l'ordre implicite d'exécution qu'elle a reçu, et qui est très élémentaire car il est constitué par le seul fait que le compteur ordinal 11 présente la valeur voulue d'adresse (50) de l'instruction K21, est associé à des données ou à un message de contenu prédéterminé, dans le registre évolutif, indiquant ainsi explicitement que cet ordre d'exécution est valable car le chemin prévu pour la suite des étapes de contrôle a bien été suivi.

En référence à l'organigramme de la figure 2, on a représenté un algorithme de contrôle comportant les suites d'instructions C1, C2, C3 et B1, B2 qui aboutissent, indépendemment l'une de l'autre, à l'instruction K21.

Plus précisément, une étape 30 représente une instruction de détection d'un ordre de verrouillage émis par le conducteur. En pareil cas, la commande de verrouillage K21 sera émise à une étape 50 ou 51 si l'une au moins des deux suites C1, C2, C3 et B1, B2 permet d'y parvenir.

Les instructions C1, C2, C3 sont exécutées aux étapes respectives successives 32, 34, 36 et les instructions B1 et B2 aux étapes 42, 44. Chacune des étapes de début (30) et de contrôlé est suivie d'une étape 31, 33, 35, 37, 41, 43, 45 de marquage, mémorisant le passage par cette étape et le contrôle positif correspondant.

Ainsi, l'étape 31 correspond à l'instruction X = X0, fixant la variable X à la valeur X0. Les étapes 33, 35 et 37 correspondent respectivement aux instructions X0 = X0 + V1, X0 =X0 + V2 et X0 = X0 + V3 et donc finalement la variable X incrémentée a la valeur X0 + V1 + V2 + V3. On peut en variante prévoir de simplement juxtaposer les valeurs V1, V2, V3 pour aboutir à X = X0; V1; V2; V3 avec donc quatre champs juxtaposés. Dans la variante avec transcodages indiquée plus haut, les instructions V0 = V1, V1 = V2 et V2 = V3, représentent une chaîne de transcodages, dépendants les uns des autres vers l'aval. L'étape 50 représente à la fois la lecture de la variable X pour vérifier qu'elle a la valeur prévue X0 + V1 + V2 + V3 (ou V3 dans la variante) et l'exécution de l'instruction de commande proprement dite K21, conditionnée par cette vérification. La branche 41 à 45 est traitée selon le même principe, qu'il est donc ici inutile de répéter, et le détail de ses conditions B1, B2 sera de même omis car il n'apporterait rien de plus à l'exposé de l'invention.

Dans cet exemple, les deux branches d'étapes en parallèle 31 à 37 et 41 à 45 ne sont pas parcourues l'une après l'autre mais, au contraire, leurs instructions sont exécutées globalement en parallèle. On exécute les premières instructions 31, 41 des deux branches, puis les deuxièmes instructions 22, 42, etc. On balaie ainsi ligne par ligne l'organigramme de l'algorithme représenté, d'exécution des étapes de contrôle et de commande, en exécutant, l'une après l'autre, les transitions algorithmiques que représentent les étapes de contrôle 32, 42, 34, 44, 36, des branches parallèles de l'organigramme. Ce procédé permet ainsi, par allocation, à diverses tâches, de tranches de temps successives représentant chacune une ou un bloc d'instructions en nombre déterminé, de faire se dérouler globalement en même temps, de façon finement entrelacée, les diverses tâches actives, et évite la nécessité d'une gestion de priorités. On notera que ce procédé, de gestion de la ressource matérielle que constitue le calculateur 1, peut s'appliquer pour traiter une pluralité de branches de tâches parallèles indépendantes, c'est-à-dire que l'étape commune du début 30 est optionnelle dans un cas général et que, de même, les étapes finales respectives 50, 51 pourraient concerner des commandes ou autres instructions sans rapport entre elles ou pourraient représenter des étapes de décision intermédiaires de modules de programmes différents.

## Revendications

1. Procédé de commande, sous une pluralité de conditions (C1, C2, C3 ; 32, 34, 36) et par un calculateur de bord (1), d'un organe (21-24) d'un véhicule automobile, procédé dans lequel on range les conditions (C1, C2, C3 ; 32, 34, 36) dans une suite et on contrôle toutes les conditions de la suite en contrôlant chaque condition et en gardant la trace (33, 35, 37) du contrôle positif de condition de rang inférieur pour commander l'organe (21-24).

2. Procédé selon la revendication 1, dans lequel, les conditions à contrôler sont rangées dans une suite déterminée.

3. Procédé selon l'une des revendications 1 et 2, dans lequel on interrompt la suite des contrôles après un contrôle négatif.

4. Procédé selon l'une des revendications 2 et 3, dans lequel on associé à la suite des contrôles une suite correspondante de mots de code (V1,V2,V3) de mémorisation de contrôles positifs et, à chaque contrôle positif, on transcode le mot de code du contrôle précédent.

5. Procédé selon l'une des revendications 1 à 4, dans lequel on vérifie que chaque condition n'est contrôlée qu'une seule fois.

6. Procédé selon l'une des revendications 1 à 5, dans lequel on balaie ligne par ligne un organigramme d'un algorithme d'exécution d'étapes de contrôle, en exécutant, l'une après l'autre, des transitions algorithmiques de branches parallèles de l'organigramme (31-37, 41-45).
